# EUROPEAN PATENT SPECIFICATION

(11) **EP 4 236 698 B1**
(45) Date of publication and mention of the grant of the patent: **21.02.2024**
(21) Application number: 21798355.0
(22) Date of filing: 21.10.2021
(51) Int. Cl.: A23L 19/00, A23L 3/005, A23L 21/10, A23L 29/00, A23L 3/16

(54) **METHOD FOR THE PRODUCTION OF A STABLE FRUIT PREPARATION**
VERFAHREN ZUR HERSTELLUNG EINER STABILEN FRUCHTZUBEREITUNG
PROCÉDÉ DE PRODUCTION D'UNE PRÉPARATION DE FRUITS STABLE

(30) Priority: 28.10.2020 EP 20204257
(43) Date of publication of application: 06.09.2023
(73) Proprietor: Agrana Beteiligungs- Aktiengesellschaft, 1020 Wien (AT)
(72) Inventor: BELOV, Sergey, 3430 Tulln (AT)
(74) Representative: SONN Patentanwälte GmbH & Co KG
(86) International application number: PCT/EP2021/079163
(87) International publication number: WO 2022/090043

(56) References cited:
- WO-A1-01/58286
- WO-A1-96/11588
- WO-A1-2004/049824
- WO-A1-2005/016029
- WO-A1-2017/035458
- WO-A1-2020/204924

## Description

### Field of the invention

Fruit preparations are made of fruits, with optional addition of sugars, stabilizers, colours and flavours.

### Background of the invention.

Fruit preparations are made of fruits, with optional addition of sugars, stabilizers, colours and flavours.

Stabilization of fruit preparation is required to ensure its homogeneity and facilitate application into the final product (for example yoghurt).

However, there is a strong demand on the fruit preparations with short list of ingredients, so addition of stabilizers is not desired by consumers.

Treatment of fruit compositions with a purified pectinmethylesterase (PME) enzyme, optionally with the addition of a calcium salt, is used in food industry to increase the viscosity and stability of fruit compositions. PME removes methyl ester groups from pectin, thereby producing pectic and pectinic acids which can associate with each other via cation cross-links to form a gel structure. For example, a treatment with PME for 200 minutes or more caused gelation in various fruit juices. WO 01/58286 A1 discloses a process for preserving foodstuffs such as fruits, berries or vegetables comprising pre-treating the foodstuff in a liquid medium so as to displace gases present in the foodstuff, subjecting the pretreated foodstuff to a pressure of at least 300MPa, and contacting the foodstuff at reduced pressure in the liquid medium with calcium ions and PME. PME is therefore used to harden fruit pieces and not to increase the viscosity of the product.

PME treatment of fruit puree that allows production of fruit preparations without stabilizer is disclosed in EP 0 624 062 B1, wherein pectinesterase and calcium chloride are added to a fruit or vegetable food composition to demethoxylate the pectin and wherein the demethoxylated pectin forms a gel. WO 96/11588 A1 discloses a process of providing a tomato-based product comprising: (i) subjecting a tomato paste to a high pressure shear field; (ii) incubating the paste with a PME source to achieve a desired consistency; and (iii) inactivating the PME.

EP 1 009 246 B1 (WO 99/011148 A1) discloses a process for the production of a fruit- or vegetable-based product, wherein PME and pectin are added to a PME-insensitive fruit or vegetable paste to increase the consistency and improve the texture of fruit- or vegetable-based products having a low solids content. US 2013/0004648 A1 discloses a process for the preparation of a stable and homogenous fruit preparation, a fruit mixture is i.a. treated at a pressure from 50 mbar to 1000 mbar. WO 2005/016029 A1 discloses a process for providing a vegetable product from vegetable pieces i.a. by holding blanched vegetable pieces in the presence of an endo-acting pectinase (not a PME!) at a temperature from 60 to 90°C to depolymerize pectin molecule and to reduce the need for mechanical treatments. The pectinase step is therefore carried out by incubation for 2 hours at 70°C without stirring. Then the enzymes were inactivated. No mechanical stress is applied in the course of this enzymatic treatment e.g. to prevent gelation. Moreover, the material subjected to enzymatic treatment is fruit pieces, not fruit puree. WO 2004/049824 A1 discloses a process for preparing shelf stable fruit spread i.a. comprising a step of incubating fruit pulp with PME at 27-40°C for a period of 2-4 hours to allow pulp to liquefy and thereby lowering the viscosity of the pulp by 60-80%. For example, banana pulp was treated with a specific enzyme mixture (containing polygalacturonase (PG) and PME) to get reduction in pulp viscosity (after adding raisins and jack fruit concentrate). Accordingly, instead of thickening, the enzyme cocktail used in this document achieved a liquifying effect which then requires a concentration step for the puree with low viscosity. No mechanical stress is applied in the course of this enzymatic treatment e.g. to prevent gelation. Stability is related to microbial stability and not to structural stability (homogeneity of fruit preparation). WO 2017/035458 A1 discloses a method comprising treating pomace with enzymes to increase palatability of pomace and to reduce the viscosity. The enzymes or enzyme mixtures comprise pectinase, hemicellulose and/or cellulase; no PME treatment is disclosed and the enzyme treatment is used for reducing the viscosity, not for thickening of a fruit puree. WO 2020/204924 A1 discloses a method of making treated fruit with a step of producing tempered fruit by tempering a fruit premix at a temperature of 110-160°F for 20-60 minutes in the presence of PME to harden fruit pieces and not to increase the viscosity of the product. Addition of Ca²⁺ salt is required for this fruit pieces hardening. WO 96/11588 A1 discloses a method for providing a tomato-based product by subjecting a tomato paste to a high pressure shear field, whereafter incubation with PME is performed to achieve a desired consistency, before PME is inactivated. In the course of this process, firming of the tomato paste is achieved by the PME incubation. No mechanical stress is applied in the course of this enzymatic treatment e.g. to prevent gelation. Accordingly, texture development is not prevented during enzymation and the consistency and formation is obtained in the course of enzymation and not after a cooling step (i.e. after pasteurization/enzyme deactivation). However, this process works only for a limited range of fruit preparations, mostly on preparations having high fruit puree (pulp) content where the texture is also provided by high amount of water insoluble particles present in the system.

There is still a need remaining for a broader range of stable packaged fruit products to which no extra stabilizers are added.

An additional challenge is to deliver the products in big containers (totes) for industrial application (e.g. addition to yoghurt). Without support from the serum, fruit cell aggregates have a tendency towards a slow precipitation, which creates a viscosity gradient in the container and makes the dosing on the dairy side problematic.

It is therefore an object of the present invention to provide production methods applicable to a wide range of fruit preparations with high or low puree (pulp) content or with fruit pieces or whole fruits. It is a further object to provide methods which allow to stabilize fruit pieces inside the preparation. It is a further object to provide processes which allow production without the need to add exogenous stabilizers which keeps the original composition of the raw fruit material from which the production of the fruit product started. Preferably, the methods are designed that addition of calcium salts or acidity regulators are not necessary.

### Summary of the Invention.

Therefore, the present invention provides a method for the production of a stable fruit preparation comprising the steps of addition of active pectinmethylesterase (PME) to a fruit preparation to perform an enzymation step on the fruit preparation, followed by inactivation of PME in the fruit preparation to obtain a stable fruit preparation, wherein gelation is prevented or at least significantly reduced during the presence of active PME in the fruit preparation by applying mechanical stress to the fruit preparation comprising active PME.

The present invention therefore provides a method of production stable fruit preparation according to claim 1 comprising ar enzymation step (i.e. a treatment with PME for a limited time period) wherein gelation (i.e. the formation of a gel) in the course of the enzymation step is prevented or essentially reduced.

A specifically preferred method comprises the following steps: 1. Fruit heating step during which internal pectic enzymes of fruits are deactivated and part of pectin bound to cell walls is solubilized. Optionally, a fruit grinding step is included if a whole fruit is used as a source of puree.

2.PME treatment ("enzymation step"), which is done to reduce esterification of pectin and increase its gelling capacity. As PME treatment is done at relatively low temperatures at which pectins can gel, crosslinking of pectin chains leading to formation of shear- and thermo-irreversible gels is prevented by applying mechanical stress to the fruit preparation according to the present invention. Further to reduce gelation Ca salts addition before or during the enzymation step should be avoided. Accordingly, the enzymation step according to the present invention is performed by thickening of the fruit preparation, especially the puree (e.g. by achieving a reduction of Bostwick units of at least 1 Bostwick unit in [cm/min]). Therefore, it is necessary that PME is applied in this enzymation step without any additives which decrease viscosity, such as viscosity-lowering enzymes, such as PG.

3. Heating to pasteurization temperature, pasteurizing and cooling. Mechanical shear preventing gelation may be maintained until the preparation is heated to 70°C; above that temperature the shear rate is adjusted according to standard production practices.

The gelled structure is built up during the cooling of fruit preparation (and not already in the course of the enzymation process) and partly after filling the preparation in a container (tote). This process allows the provision of stable fruit preparations which do not require addition of exogenous stabilizers. Moreover, preventing gelation during enzymation allows also a proper handling of the preparations for the further production steps which is specifically advantageous for industrial processes performed on a mass production level. Addition of Ca salts is also not required, which allows to make a product with a clean label. This process also allows using purees produced from frozen fruits as a starting material. In frozen fruit more pectin is retained, these purees also provide benefits for colour and taste. This also implies that the method according to the present invention shows its best performance in fruit preparations which are not Solanum fruit preparations, especially not fruit preparations from potato, tomato or eggplant, i.e. in fruit preparations from strawberry, peach, apricot, fig, pear, sour cherry, cherry, apple, blueberry, mango, banana; or mixtures thereof.

Gelation during the enzymation step is prevented by applying a mechanical stress. This is advantageous compared to other means of gelation prevention because it may be easily and smoothly integrated into a fruit preparation process and does not require addition and elimination of chemical gelation prevention agents or the provision of complex apparatuses or devices during the production process.

The appropriate (significant) reduction or prevention of gelation in the method according to the present invention is achieved by the present invention e.g. by applying a mechanical stress of 1 to 100 Pa, preferably of 3 to 20 Pa, to the fruit preparation containing active PME. Preferably, such mechanical stress is applied in the method according to the present invention by stirring, shaking, pumping or combinations thereof, especially by stirring. In fact, as also shown in the example section below, there is a big difference in reversibility and values of elasticity modulus when shear stress is increased from 0.5 to 3 Pa. As also confirmed experimentally, when the shear stress is further increased to 20 Pa, increase in elasticity modulus is lower. Accordingly, applying a shear stress of 0.5 Pa is an appropriate lower limit to obtain the advantageous effects according to the present invention. Preferred methods according to the present invention apply a shear stress of at least 1 Pa, especially of at least 3 Pa.

Combination of appropriate mechanical shear during enzymation according to the present invention (which exceeds yield stress of the recipe mixture and can be defined for each recipe as e.g. shown in example 4) and heat treatment of fruit prior to enzymation step reduces flowability on Bostwick consistometer for at least 1 cm/min, preferably at least 2 cm/min, especially at least 3 cm/min, and/or allows getting stable fruit preparations with flowability < 10 cm/min and having gelled structure (elasticity modulus (G') > loss modulus (G") at low shear.

A suitable method for determining mechanical stress as defined and used in the present invention is disclosed by Läuger et al. in the article "Discrepancies in the specified data and presentation of a new data set for NIST Standard Reference Material® SRM 2490 (available under https://www.researchgate.net/profile/Joerg_Laeuger/publication/269407610_Discrepancies_in the Sp ecified_Data_and_Presentation_of_a_New_Data_Set_for_NIST_Standard_Reference_MaterialR_SRM_2 490/links/548af3d20cf2d1800d7dace8/Discrepancies-in-the-Specified-Data-and-Presentation-of-a-New-Data-Set-for-NIST-Standard-Reference-MaterialR-SRM-2490.pdf) and can be performed with a rheometer as disclosed therein (Physica MCR 501 Rheometer from Anton Paar (AT)) with Peltier temperature control by recording the shear force via the torque at each measuring point (shear stress covers all types of mechanical stress).

Application of mechanical stress is foreseen by the present invention to avoid formation of gel during enzymation process. The gels formed during enzymation (in absence of agitation) are characterized by low tan 6 (<0.2) and are shear-irreversible. However, if mechanical shear is applied during the enzymation step, the formation of strong gel is avoided, and shear-reversibility of the gel is improved.

From the IUPAC definition, it follows that a gel is a nonfluid colloidal network or polymer network that is expanded throughout its whole volume by a fluid. Gels consist of a solid internal three-dimensional network structure that spans the volume of a liquid medium and ensnares it through surface tension effects. Both by weight and volume, gels are mostly fluid in composition and thus exhibit densities similar to those of their constituent liquids. Due to the aqueous nature of the gels obtained by the processes in the present field of technology (as associations of pectic and pectinic acids via cation cross-links, hydrogen bonds or hydrophobic interactions), the gels referred to herein are hydrogels and have - apart from the fruit pieces - approximately the density of water. A three-dimensional solid results from the hydrophilic polymer chains being held together by cross-links. Because of the inherent cross-links, the structural integrity of the hydrogel network does not dissolve from the high concentration of water. Hydrogels are highly absorbent (they can contain over 90% water) natural or synthetic polymeric networks. Hydrogels also possess a degree of flexibility very similar to natural tissue, due to their significant water content. A "significant" or "essential" reduction according to the present invention is defined by the reduction compared to the same preparation without applying mechanical stress during the enzymation step. The reduction may be traced by comparing Bostwick units of the final products of mechanically untreated fruit preparations with the final products obtained with the present invention.

Bostwick units are used for determining the consistency of materials. The consistency of various fluid and semi-fluid processed fruits and vegetables and similar products can be determined (in Bostwick units [cm/min]) by measuring these preparations in a consistometer with respect to their flowability. Bostwick units may be measured according to the disclosure of US 2,295710 A, Steele et al. (Dysphagia 29 (2014), 355-364), Perona (Appl. Rheol. 15 (2005), 218-229), McCarthy et al. (J. Food Sci. 72 (2009), E291-E297), Balestra et al. (Proc. Food Science 1 (2011), 576-582, specifically for physico-chemical and rheological measurements of fruit purees) or the standard ASTM F1080-93 (2019; "Standard Test Method for Determining the Consistency of Viscous Liquids Using a Consistometer"). A Bostwick consistometer is a simple bench device in which a fixed volume of fluid is released from a chamber to flow into an adjacent channel, which is marked to measure the leading edge of the liquid when it comes to rest. The unit of Bostwick measurement is expressed as distance flowed (cm) over a 30-s or 60-s interval. The correlation of Bostwick units and other rheological units is known in the present field and illustrated e.g. in Steele et al. (2014), McCarthy et al., Balestra et al., and Perona (2005).

Accordingly, the mechanical stress to be applied according to the present invention has to preferably result in an improved consistency as determined by a reduction of Bostwick units of at least 1, preferably at least 2, especially at least 3, Bostwick units (in [cm/min]). Alternatively, a significant reduction of gelation is also achieved, if a reduction of at least 20%, preferably at least 25%, especially at least 30%, reduction of Bostwick units is achieved. In preferred embodiments of the present invention, reduction of at least 5, preferably at least 6, especially at least 7, Bostwick units, or, alternatively in relative terms, 40% or more, preferably 50% or more, especially 60% or more, can be obtained with the present invention, especially if combined with other method steps, such as pre-heating (see examples). In specifically preferred embodiments, the consistency of the fruit preparations is improved by at least 10, preferably at least 13, especially at least 15, Bostwick units, compared to the fruit preparation with no enzymation step performed. Bostwick units are measured in cm/min, preferably by the method disclosed by the standard ASTM F1080-93, and as measured in the examples. In case of doubt, Bostwick units as disclosed herein are measured by this standard method (including equilibration of the samples at room temperature (20°C) and with an additional agitation with a propeller stirrer for 25 sec at 25 rpm, as performed in the examples).

Accordingly, the present invention is based on the surprising effect that applying mechanical stress to the fruit preparation during enzymation step (e.g. by agitation) leads to an unexpected improvement of viscosity (or reduction of flowability) in comparison with the fruit preparation without enzymation and also in comparison with the enzymated fruit preparation which is not exposed to a mechanical stress during enzymation. In the course of the development of the present invention, it turned out that if an irreversible gel is formed early in the process (e.g. during the enzymation) this results in disadvantageous product characteristics (e.g. the gels formed by a process not applying a mechanical stress during enzymation are not restorable anymore after subsequent destruction (e.g. by heat or shear stress)). If this gelation is prevented or at least significantly reduced during enzymation according to the present invention, more gelation occurs in the subsequent steps until the final product is obtained and therefore, the products obtained by the present process have improved product characteristics (e.g. the product is thicker and more stable). In fact, when a gel is formed after the enzymation process carried out according to the present invention, e.g. in the course of cooling, especially under constant agitation, this gelation may even be reversible. Accordingly, by applying the present invention during enzymation, less gelation is obtained during the enzymation step. However, afterwards (e.g. after cooking and cooling, etc.) more gel is developed. Without applying a mechanical stress during enzymation, more gelation is obtained in this enzymation step but these gels are then irreversibly destroyed afterwards, e.g. as soon as a heating step is applied (in fact, it was also surprisingly observed that on cooling this gel cannot be restored so that more liquid product is obtained in the final product). In the course of the present invention it was also observed that - for the present method and the products obtained therewith - gelation is related to higher viscosity and lower Bostwick values (although , in principle, gelation is the formation of a three-dimensional network, whereas viscosity is resistance to flow, in the present invention a product is obtained for which analysis by a Bostwick consistometer (depending on yield stress and viscosity) has turned out to be a good measure of apparent viscosity).

### Detailed Description of the Invention.

The method according to the present invention is a significant further improvement of the PME process for obtaining fruit preparations that allows improved stabilization of the fruit preparations, especially when they also contain fruit pieces inside the preparation.

In the course of the present invention, it was found that for a stable fruit preparation combination of two steps is needed: heat treatment of fruit puree before enzymation and application of mechanical stress during enzymation process. This process according to the present invention allows production of fruit/vegetable preparations, jams, sauces which do not require addition of exogenous stabilizer (like pectin, citrus fiber, starch, LBG, guar, xanthan, carrageenan). Products prepared by the process according to the present invention also do not require any addition of calcium salts or acidity regulators and may have quantities of fruit puree as low as 10%. Therefore, the present invention allows to maximize the quantity of fruit pieces in a fruit preparation and at the same time to keep the quantities of puree as small as desired. According to preferred embodiments of the present invention, the present method in particular allows the production of preparations made only from fruit (including whole fruits, fruit pieces, fruit purees and fruit juice concentrate). Preferably, the mechanical stress is applied to the fruit preparation containing active PME by stirring, shaking, pumping or combinations thereof, especially stirring. These methods have turned out to be specifically smoothly integratable into fruit production processes, also on a large scale and are therefore specifically suitable for being applied in food industry.

The enzymation step of the fruit preparation with PME may be carried out in the way already known in the art - with the exception of applying sufficient mechanical stress during this enzymation process.

According to a preferred embodiment of the present invention the fruit or puree or the fruit used for the fruit preparation is subjected to heat treatment prior the enzymation step. Heat treatment of puree before the enzymation is advantageous because it serves to deactivate naturally present enzymes, especially polygalacturonase (PG). Heat treatment is especially preferred for purees which are produced from frozen fruits, as enzymatic activity is high in such purees after thawing as cells are damaged and enzyme is released. Deactivation of natural PG and PME in fruit was studied for many fruits (T. Duvetter, D.N. Sila, S. Van Buggenhout, R. Jolie, A. Van Loey, and M. Hendrickx. Pectins in Processed Fruit and Vegetables: Part I-Stability and Catalytic Activity of Pectinases. Vol. 8, 2009-Comprehensive Reviews in Food Science and Food Safety). Preferably, this heat treatment before enzymation is performed at temperatures from 60 to 110°C, preferably from 75 to 95°C, and/or for a duration of 30 seconds to 30 minutes, preferably for a duration of 5-10 minutes.

According to a preferred embodiment the method according to the present invention excludes the addition of viscosity-lowering enzyme activity in the process, especially the addition of PG enzyme.

Preferably, the enzymation step is performed for a duration of 1 to 120 min, preferably of 2 to 60 min, especially of 5 to 30 min; and/or at a temperature of 20 to 60°C, preferably of 30 to 50°C, especially of 35 to 40°C and/or under stirring of 10 to 500 rpm, preferably of 20 to 100 rpm, especially of 30 to 50 rpm. Preferably, the present method further comprises a fruit heating step before addition of PME to the fruit preparation and a heating step after the enzymatic treatment with PME, especially a pasteurizing step, wherein preferably mechanical stress is also applied in the course of the heating step, especially at temperatures under 70°C. The fruit heating step ir preferably performed before addition of PME to the fruit preparation and is preferably performed for a duration of 1 to 120 min, preferably of 2 to 60 min, especially of 5 to 30 min.

According to a preferred embodiment of the present invention, the enzymation step is followed by pasteurization of fruit preparation where the enzyme is deactivated and cooling of the preparation comprising the deactivated enzyme. The pasteurizing step is preferably performed with at least 60°C, preferably at least 70°C, especially at least 80°C; and /or with a duration at least 1 min preferably at least 3 min, especially at least 5 min. During the cooling stage a gel can be allowed to form. If no mechanical stress was applied during the enzymation process, the gel obtained by such processes includes clumps of firmer gel in the matrix.

The fruits processed with the present invention can be any kind of fruit. Preferred fruit raw material is material which is already currently exposed to an enzymation step (with PME) in modern food industry facilities. Accordingly, the fruits to be processed according to the present invention are preferably PME-sensitive fruit preparations. Preferred fruit preparations according to the present invention are preparations selected from strawberry (*Fraqaria ananassa*), peach *(Prunus persica),* apricot (*Prunus armeniaca*), fig (*Ficus carica*), pear (*Pyrus*), sour cherry *(Prunus cerasus),* cherry (*Prunus avium*), apple (Pyrus malus, *Malus pumila),* blueberry (*Vaccinium cyanococcus*), mango *(Mangifera indica),* banana (*Musa acuminata*); or mixtures thereof.

The present invention is applicable to a very diverse scope of fruit preparations, which means that there is no need to have high or low puree content or to prevent inclusion of fruit pieces. In fact, the present invention allows the provision of stable fruit preparations which contain fruit pieces and keeps them also three-dimensionally in a stable shape (i.e. the fruit pieces do not move to the bottom during storage). Accordingly, the fruit preparation processed according to the present invention may preferably also contain fruit pieces, or whole fruits.

It is specifically this three-dimensional stability kept during storage which allows inclusion of further components into the fruit product according to the present invention, both in separated (e.g. layered) structure but also in already admixed structure. Therefore, in a preferred embodiment of the present invention, the fruit preparation contains further nutritional components, preferably cereals, seeds, nuts, or mixtures thereof.

With the present invention, it is possible to omit the addition of exogenous components, such as stabilizers. It is also possible with the present method to omit addition of calcium salts during the production process. A preferred embodiment of the method according to the present invention is therefore a process, wherein no Ca salts are added during production, especially wherein no Ca salts are added before inactivation of PMF.

According to a preferred embodiment of the present invention, a food product can be provided which (besides the inactivated PME) only contains material derived from the fruits of the raw material. This preferred embodiment therefore provides a stable fruit preparation consisting only of fruits in the form of fruit puree, fruit juice, fruit pieces, or mixtures thereof and inactivated PME.

Preferably, the fruit preparation is a fruit puree, i.e. the fermentable but unfermented product obtained by any suitable physical process such as sieving, grinding, milling the edible part of whole or peeled fruit without removing the juice.

In contrast to many PME enzymation methods disclosed in the prior art, the present invention does not have to apply high pressure. Accordingly, the method according to the present invention can be carried out at normal pressure conditions. The process according to the present invention, at least the enzymation step, is therefore preferably performed without applying high pressure of 300 MPa or more, even more preferred without applying a pressure of 180 MPa or more, especially wherein the enzymation step is performed at atmospheric pressure conditions.

On the other hand, the present method, of course, also allows the addition of further compounds which are added in known fruit product preparation processes. For example, the present method may also be performed in an embodiment wherein Ca²⁺ ions are present during production.

According to a preferred embodiment, the fruit preparation processed according to the present invention has a pH of 3.0 to 7.0, preferably of 3.2 to 5.5, especially of 3.5 to 4.2.

The present invention is suitable for large-scale food industry. Accordingly, in a preferred method according to the present invention the stable fruit preparation obtainable by the present process is packaged into a storage-stable form.

The present invention is further illustrated by the following examples and the figures, yet without being limited thereto.
Fig. 1 shows an example of a rheology curve in a 4-step trial (x-axis: time [s], y-axis: Storage Modulus G' [Pa], Loss Modulus G" [Pa]);
Fig. 2 shows the gel development during the enzymation and reversibility of strawberry gels at two different shear rates applied (x-axis: time [s], y-axis: Storage Modulus G' [Pa], Loss Modulus G" [Pa]); 0,1 % of shear strain corresponds to 0,5 Pa of shear stress, 0,5 % of shear strain corresponds to 1 Pa shear stress;
Fig. 3 shows the influence of shear during enzymation on resulting values of elasticity and loss moduli after application of high shear, i.e. the effect of different shear stress [Pa] during enzymation step (x axis) on the values of G' and G" [Pa]after high-shear treatment (y axis).

### Examples

### Example 1: Fruit preparations of strawberry, banana and peach

### Model recipe

Fruit puree - 50%
Sugar - 50%
(Fungal PME-0,05%)

Model recipes (1 kg sample) having only fruit puree and sugar were cooked with or without pre-heating step and with or without agitation during enzymation step. The cooking was done in lab in Miniterm Ecotherm F water bath (Dinkelberg Analytics). The samples were agitated at 40 rpm.

Strawberry and peach purees were produced from IQF fruit (not heat-treated before) and then part of the puree was additionally heated at 90 °C for 10 minutes. For Banana aseptic puree was used, still some effect of heat-treatment can be seen.

Enzymation was done at 40 °C for 10 minutes.

| | Strawberry | Banana | Peach |
|---|---|---|---|
| Control (no enzymation) | 24 | 13 | 18 |
| No agitation, no pre-heating | 18 | 8 | 14 |
| Agitation, no pre-heating | 12 | 6 | 8 |
| No agitation, pre-heating | 9* | 7 | 9 |
| Agitation, pre-heating | 7.5 | 5 | 5 |

In another set-up, fruit preparations of apricot, pear and apple are provided with 50% fruit puree and 50% sugar Here, the effects of agitation and puree pasteurization were not studied separately. The consistency measurements (Bostwick flowabilities) for the fruit preparations according to the present invention ("Enzymation") in comparison with the fruit preparations without the enzymation ("No enzymation") step are as follows:

| | No enzymation | Enzymation |
|---|---|---|
| Apricot | 10 | 5,5 |
| Pear | 18 | 5,2 |
| Apple | 15 | 3,5 |

### Measured are Bostwick flowabilities for 60 seconds

The figures given in the tables are consistency figures measured in Bostwick units ([cm/min]) as determined in the end product. In short, this consistency was determined with a Bostwick consistometer (CSC Scientific Co., Fisher Scientific, Nepean, ON, Canada) to evaluate resistance to flow of the fruit preparations by the ASTM standard method (ASTM, 2019; Standard F1080-93). Before measuring the sample on Bostwick consistometer the samples were equilibrated at room temperature (20°C) and additionally agitated (Heidolph, RZR 2102 propeller stirrer, 25 sec at 25 rpm). Flow on an inclined plane is caused by the effect of the gravitational force on the product. The flow distance depends on the viscosity but also on the elastic properties and adherence of the product to the surface of the consistometer. The spring-loaded gate was first closed so that the reservoir could be filled to the upper limit (75mL), and then the gate was opened, instantaneously releasing the fruit preparation. The distance (in cm) that the fruit preparations travelled after 60s was recorded. Triplicates were performed for each of the fruit preparations under analysis. The smaller the flow distance, the higher the consistency of the fruit preparation.

In case of every fruit a positive effect of both agitation and pre-treatment of puree can be observed.

### Example 2: Mango preparation with fruit ingredients only.

The cooking of 1 kg sample was done in lab in Miniterm water bath.
Mango puree (pasteurized) - 20%
Mango cubes 9x9 - 55%
Grape juice concentrate - 24%
Pectinmethylesterase - 0.1%
Water - 0.9%
   Mix all the ingredients except PME and heat to 40°C
   Add PME, then agitate the mixture for 10 minutes (in the lab at 40 rpm), then immediately heat to 85 °C
   Pasteurize the mixture for 10 minutes at 85 °C and cool it under agitation to 30 °C
   Fill the preparation into a container; store container in a cold room 8-15 °C

The preparation produced this way has Bostwick flowability 6,5 at 20°C and is stable for at least the observation period of 56 days.

### Example 3: Strawberry preparation with sugar

Strawberry - 50%
Sugar - 25%
Strawberry puree - 25%
Pectinmethylesterase (Aspergillus niger) - 0,05%

Slowly add 200 kg of frozen whole strawberries to the cooking vessel containing 10-15 l of water. Heat the fruits up to 65 °C, then produce a puree.
Heat the resulting puree to 90 °C for 5 minutes
Add 200 kg of sugar
When the sugar is completely dissolved add 400 kg of 10x10 strawberry dices
Warm the mixture to 40 °C and add solution of PME enzyme
Agitate the mixture for 10 minutes at 16 rpm, then immediately heat to 85 °C
Pasteurize the mixture for 10 minutes at 85 °C and cool it under agitation to 30 °C
Fill the preparation into a 800 l container; store container in a cold room 8-15 °C

Mean shear rates during agitation step in production were ca. 10-20 s⁻¹ (computer CFD simulation). Viscosity of fruit mixture during enzymation step was within range of 1000 - 2000 mPa*s this gives shear stress values of 10 to 40 Pa

The resulting strawberry fruit preparation was stable within 42 days. This example shows that upscaling the method from the present invention from the lab to industrial scale was successful.

### Example 4: Model system shear stress

During laboratory tests and test on industrial line it was observed that no shear or low shear during enzymation leads to lower final viscosity. In the following experiments, shear stress was quantified in a series of rheometer trials.

### Rheological trial method:

Enzymation was done at 20 °C (also based on handling reasons). Enzyme concentration was adjusted accordingly (increased from 0.1% to 0.2%). The model systems were chosen in the way that firm brittle gel is formed already after 10-12 minutes of enzymation but in the beginning the mixture is relatively liquid.

### Production of strawberry recipe:

Strawberry puree from IQF fruits (70%) was mixed with sugar (30%) and pasteurized (so that the strawberry enzymes are deactivated) and then cooled down to ambient temperature. The preparation was sieved through a fine sieve (0.5 mm) to remove all the particles that can influence the measurement.

Amplitude sweep was measured in the model system before addition of enzyme as well as 10 minutes after addition of enzyme (as the measurement of full amplitude sweep takes time the first point was recorded 10 minutes after start of enzymation and the last point in ca. 15 minutes). With amplitude sweep measurement linear visco-elastic range of the product was found. For the kinetic trials a point (0.5% shear) was selected which was within the linear viscoelastic range. Kinetic tests were done according the following procedure: The enzyme was added, and the timer was started. After stirring for 15 seconds the sample was placed on rheometer (PP50 measuring system) and trimmed. Recording the curve has started exactly in 2 minutes from the enzyme addition.

The kinetic step without high shear included 1-2 steps.
Controlled pre-shear at fixed shear strain was applied (G' and G" were measured on modular compact rheometer MCR 302 at this shear, shear stress was also recorded by the rheometer)
0.5% shear strain was applied for 5 minutes (G', G" and shear stress were recorded)
The kinetic test with shear included 3 of 4 steps. Step 2 was not done when the curve without high shear was recorded.
Controlled pre-shear at fixed shear strain was applied (G' and G" and, shear stress was also recorded by the rheometer)
0.5% shear was applied for 1 minute (G', G" and shear stress were recorded)
High shear was applied for 20 seconds
Recovery of G' and G" (recorded at 0.5% shear strain) was monitored.

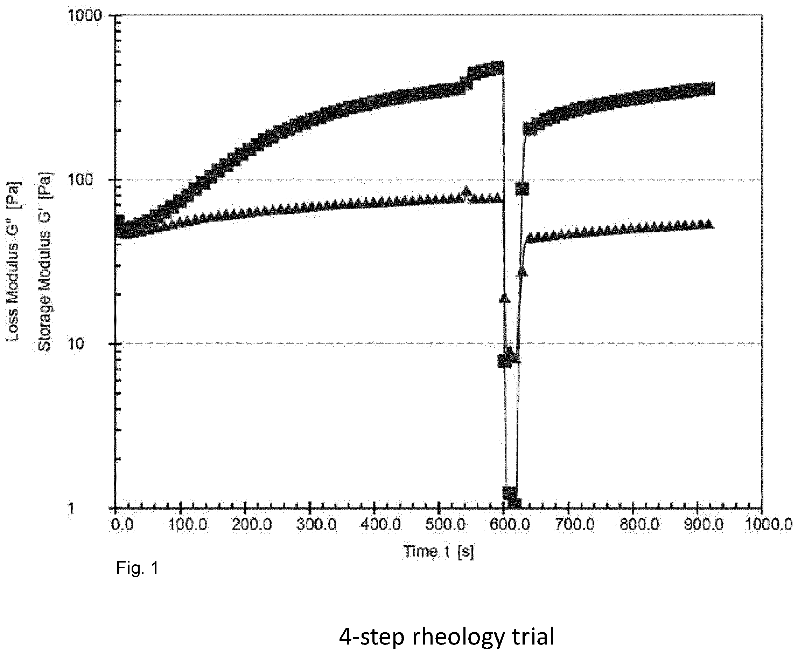

An example of a rheology curve in a 4 steps trial is depicted in Fig. 1.

Time change in step 3 from 20 seconds to 1 minute did not change the results, so the time was kept at 20 seconds. Shear-reversibility can be defined as the % of G' or complex modulus G* lost after the shear was applied. However, during the present trial the enzyme remains active and continues to work. So, for more accurate measurement of shear-reversibility of the product the results of 2-step kinetic trial (no high shear) and 3-step trial (high shear applied) were compared or 4-step trial was used where approximation of the curve from step 2 with the recovery curve (step 4) was compared.

Amount of shear was modified by the different shear strain applied on step 1. However, it is also important how many measuring points were taken. If only once in 10 seconds was measured, the shear is lower. If every second was measured, the shear is higher. Shear stress is recorded automatically (it is directly related to torque) As the product thickens - shear stress also increases. Therefore, mean values of shear stress were used during the step 1. To study the effect of enzymation time only step 1 was increased, while other steps were kept the same.

### Results:

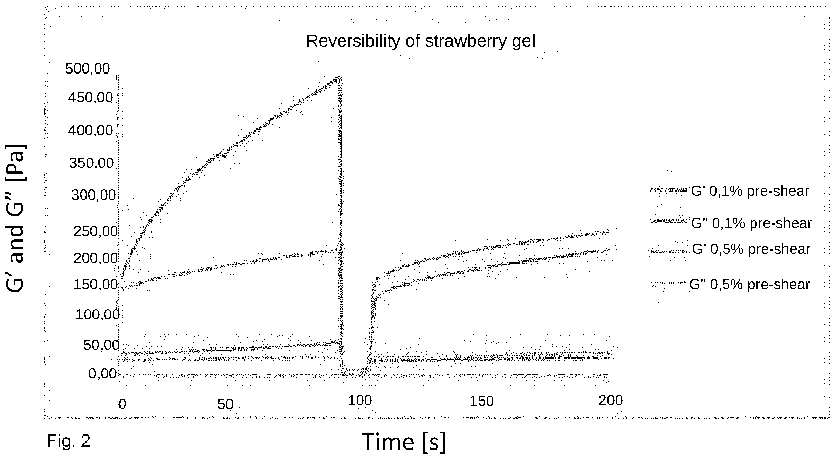

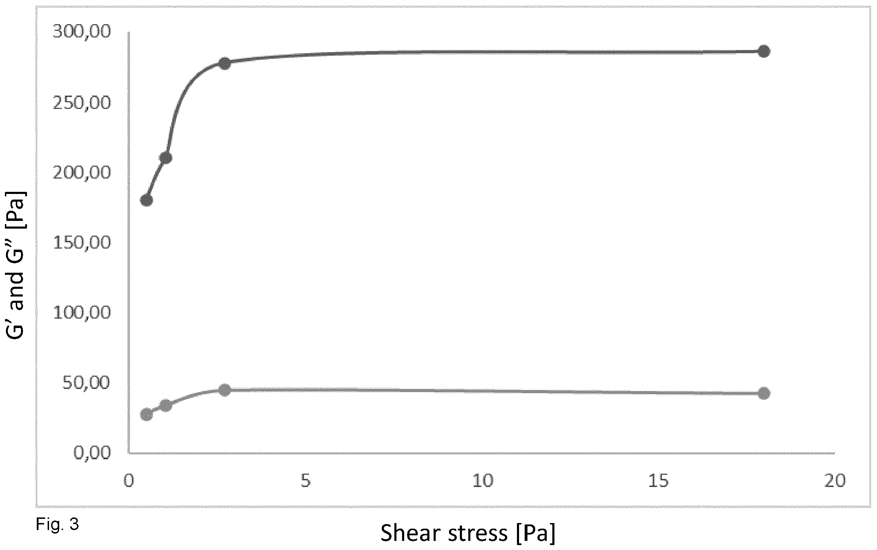

It was observed that much more gel is developed initially when no shear is applied. But then this gel is not reversible once we apply high shear (see Fig. 2). We have studied gel development at different shear stresses applied. In strawberry recipe there is a big difference in reversibility and values of elasticity modulus when we increase shear stress from 0.5 to 3 Pa, however when the shear stress is further increased to 20 Pa increase in elasticity modulus is lower (Fig. 3). Accordingly, in this model system applying a shear stress of 0.5 Pa is an appropriate lower limit to obtain the advantageous effects according to the present invention. to the levels of shear, however, cannot be generalized as the fruit systems that we have studied have very different viscosities and yield stress values.

Further increase of shear stress (e.g. above 100 Pa) may lead to decomposition of other stabilizers naturally present in fruit purees, first of all native starches. High shear may also result in particle size reduction and loss of viscosity. Therefore, application of high shear doesn't provide additional benefits.

Obviously higher agitation increases the speed of enzymation reaction, so the observed effect may be also attributed to higher enzymation speed. However, before the high shear was applied the products that were strongly agitated didn't have higher viscosity than the products that were not agitated (weakly agitated). To further prove that the positive effect according to the present invention is due to texture modification by mechanical stress and not due to higher enzymation degree, additional trials with higher enzyme concentration and longer enzymation times were performed. In these trials, it was observed that increase of enzyme concentration or enzymation time did not improve shear reversibility of the products which were not agitated.

### Methods used

### Measurement of mechanical stress [Pa]

Mechanical stress is measured in Pa by the method disclosed by Läuger et al. in the article "Discrepancies in the specified data and presentation of a new data set for NIST Standard Reference Material^{®} SRM 2490" and was performed with a rheometer as disclosed therein (Physica MCR 501 Rheometer from Anton Paar (AT)) with Peltier temperature control.

### Brix and pH measurement

Brix and pH measurements are done using RX-5000 refractometer from Atago LTD (Japan) and pH-meter InoLab 730 WTW GmbH (Weilheim, Germany) respectively.

### Viscosity Measurement

Viscosities of the purees were measured on Brookfield viscometer (spindle 3, 10 rpm). Final preparations were accessed on a Brookfield viscometer and on a Bostwick consistometer. In all cases the samples were equilibrated at room temperature. Before measuring the sample on the Bostwick consistometer the samples were additionally agitated (Heidolph, RZR 2102 propeller stirrer, 25 sec at 25 rpm) to ensure homogeneity.

Additional tests on viscoelastic properties were done on the modular compact rheometer MCR 302 (Anton Paar GmbH, Graz, Austria), which is temperature controlled with a Haake K20 and DC5 device (Haake, Karlsruhe, Germany). The plate-plate measuring system (PP50) was used. Results are collected using RheoCompass software. Temperature is always set to 20 °C and measurement starts after 2 min of temperature constancy. Tests are always done as duplicate.

To determine the viscoelastic properties of the substance, the amplitude gamma was logarithmically increased from 0.01 to 1000 %. For interpreting the viscoelastic properties, the ratio between G'/G" at an angular frequency of 10 1/s is taken to describe the strength of the strawberry fruit preparation.

### Storage stability

The products were kept in transparent containers (500 ml) for 2 months at +10 °C. Floating of pieces and syneresis were noticed, however the exact amounts of liquid separated from the gel was not measured. Bostwick flowability at the end of shelf life was re-measured and compared to the value after 1 day. Acceptable difference for acknowledging presence of storage stability was <2 Bostwick units.

## Claims

1. Method for the production of a stable fruit preparation comprising the steps of addition of active pectin methyl esterase (PME) to a fruit preparation to perform an enzymation step on the fruit preparation, followed by inactivation of PME in the fruit preparation to obtain a stable fruit preparation, wherein gelation is prevented or at least significantly reduced during the presence of active PME in the fruit preparation by applying mechanical stress to the fruit preparation comprising active PME, wherein the method provides an improved consistency as determined by a reduction of Bostwick units of at least 1 Bostwick unit in [cm/min], wherein the Bostwick units are measured according to the standard ASTMF1080-93, including equilibration of the samples at 20°C with an additional agitation with a propeller stirrer for 25 sec at 25 rpm, and wherein the reduction of Bostwick units is the reduction compared to the fruit preparation without enzymation and also compared with the enzymated food preparation, which is not exposed to a mechanical stress during enzymation.

2. Method according to claim 1, wherein the fruit preparation is a puree; and/or wherein the fruit preparation contains fruit pieces, or whole fruits; and/or wherein the fruit preparation is a preparation selected from strawberry (*Fragaria ananassa*), peach *(Prunus persica),* apricot (*Prunus armeniaca*), fig (*Ficus carica*), pear (*Pyrus*), sour cherry *(Prunus cerasus),* cherry (*Prunus avium*), apple (Pyrus malus, *Malus pumila),* blueberry (*Vaccinium cyanococcus*), mango *(Mangifera indica),* banana (*Musa acuminata*); or mixtures thereof.

3. Method according to claim 1 or 2, wherein the puree or the fruit used for the fruit preparation is subjected to heat treatment prior the enzymation step.

4. Method according to claim 3, wherein the heat treatment is performed at temperatures from 60 to 110 °C, preferably from 75 to 95°C; and/or wherein the heat treatment is performed for a duration of 30 seconds to 30 minutes, preferably for a duration of 5-10 minutes.

5. Method according to any one of claims 1 to 4, wherein a mechanical stress of 1 to 100 Pa, preferably of 3 to 20 Pa, is applied to the fruit preparation containing active PME, preferably by stirring, shaking, pumping or combinations thereof.

6. Method according to any one of claims 1 to 5, wherein the fruit preparation contains further nutritional components, preferably cereals, seeds, nuts, or mixtures thereof.

7. Method according to any one of claims 1 to 6, wherein the stable fruit preparation consists of fruits in the form of fruit puree, fruit juice, fruit pieces, or mixtures thereof and inactivated PME.

8. Method according to any one of claims 1 to 7, wherein Ca²⁺ ions are present during production, especially wherein Ca²⁺ ions are present before inactivation of PME; or wherein no Ca²⁺ ions are added during production, especially wherein no Ca²⁺ ions are present before inactivation of PME.

9. Method according to any one of claims 1 to 8, wherein the preparation has a pH of 3.0 to 7.0, preferably of 3.2 to 5.5, especially of 3.5 to 4.2.

10. Method according to any one of claims 1 to 9, wherein the stable fruit preparation is packaged into a storage-stable form.

11. Method according to any one of claims 1 to 10, wherein the method further comprises a fruit heating step before addition of PME to the fruit preparation and a heating step after the enzymatic treatment with PME, especially a pasteurizing step, wherein preferably mechanical stress is also applied in the course of the heating step, especially at temperatures under 70°C.

12. Method according to any one of claims 1 to 11, wherein the enzymation step is performed for a duration of 1 to 120 min, preferably of 2 to 60 min, especially of 5 to 30 min; and/or wherein the enzymation step is performed at a temperature of 20 to 60°C, preferably of 30 to 50°C, especially of 35 to 40°C; and/or wherein the enzymation step is performed under stirring of 10 to 500 rpm, preferably of 20 to 100 rpm, especially of 30 to 50 rpm.

13. Method according to any one of claims 1 to 12, wherein the method further comprises a pasteurizing step with at least 60°C, preferably at least 70°C, especially at least 80°C; and/or wherein the method further comprises a pasteurizing step with a duration of at least 1 min, preferably at least 3 min, especially at least 5 min.

14. Method according to any one of claims 1 to 13, wherein the method further comprises a fruit heating step before addition of PME to the fruit preparation of at least 50°C, preferably at least 65°C, especially at least 75°C and/or wherein the method further comprises a fruit heating step before addition of PME to the fruit preparation for a duration of 1 to 120 min, preferably of 2 to 60 min, especially of 5 to 30 min.

15. Method according to any one of claims 1 to 14, wherein the method provides an improved consistency as determined by a reduction of Bostwick units of at least 2, preferably at least 3, Bostwick units in [cm/min]; or wherein the method provides an improved consistency as determined by a reduction of Bostwick units of at least 5, preferably at least 6, especially at least 7, Bostwick units in [cm/min]; and/or wherein the method provides an improved consistency as determined by a reduction of Bostwick units of at least 20%, preferably at least 25%, especially at least 30%; or wherein the method provides an improved consistency as determined by a reduction of Bostwick units of at least 40%, preferably 50%, especially at least 60%.

## Patentansprüche

1. Verfahren zur Herstellung einer stabilen Fruchtzubereitung, aufweisend die Schritte der Zugabe von aktiver Pektinmethylesterase (PME) zu einer Fruchtzubereitung, um einen Enzymierungsschritt von der Fruchtzubereitung durchzuführen, gefolgt von der Inaktivierung von PME in der Fruchtzubereitung, um eine stabile Fruchtzubereitung zu erhalten, wobei die Gelierung in Gegenwart von aktiver PME in der Fruchtzubereitung durch Anwenden von mechanischer Beanspruchung auf die Fruchtzubereitung, die aktive PME aufweist, verhindert oder zumindest erheblich verringert wird, wobei das Verfahren eine verbesserte Konsistenz bereitstellt, bestimmt durch eine Verringerung von Bostwick-Einheiten um mindestens eine Bostwick-Einheit in [cm/min], wobei die Bostwick-Einheiten gemäß der Norm ASTMF1080-93 gemessen werden, einschließlich einer Äquilibrierung der Proben bei 20 °C mit einem zusätzlichen Rühren mit einem Propellerrührer für 25 s bei 25 U min⁻¹, und wobei die Verringerung von Bostwick-Einheiten die Verringerung im Vergleich zu derjenigen der Fruchtzubereitung ohne Enzymierung und auch im Vergleich zu derjenigen der enzymatisierten Lebensmittelzubereitung, die keiner mechanischen Beanspruchung während der Enzymierung ausgesetzt ist, ist.

2. Verfahren nach Anspruch 1, wobei die Fruchtzubereitung ein Püree ist; und/oder wobei die Fruchtzubereitung Fruchtstücke oder ganze Früchte enthält; und/oder wobei die Fruchtzubereitung eine Zubereitung ist, die aus Erdbeere (*Fragaria ananassa*), Pfirsich *(Prunus persica*)*,* Aprikose (*Prunus armeniaca*), Feige (*Ficus carica*)*,* Birne (*Pyrus*), Sauerkirsche *(Prunus cerasus*), Kirsche (*Prunus avium*), Apfel (Pyrus malus, *Malus pumila*), Blaubeere (*Vaccinium cyanococcus*), Mango *(Mangifera indica),* Banane (*Musa acuminata*), oder Mischungen davon ausgewählt ist.

3. Verfahren nach Anspruch 1 oder 2, wobei das Püree oder die Frucht, das/die für die Fruchtzubereitung verwendet wird, vor dem Enzymierungsschritt einer Wärmebehandlung unterzogen wird.

4. Verfahren nach Anspruch 3, wobei die Wärmebehandlung bei Temperaturen von 60 bis 110 °C, vorzugsweise von 75 bis 95 °C durchgeführt wird; und/oder wobei die Wärmebehandlung für eine Dauer von 30 Sekunden bis 30 Minuten, vorzugsweise für eine Dauer von 5 bis 10 Minuten, durchgeführt wird.

5. Verfahren nach einem der Ansprüche 1 bis 4, wobei eine mechanische Beanspruchung von 1 bis 100 Pa, vorzugsweise von 3 bis 20 Pa, auf die Fruchtzubereitung, die aktive PME enthält, vorzugsweise durch Rühren, Schütteln, Pumpen oder Kombinationen davon aufgebracht wird.

6. Verfahren nach einem der Ansprüche 1 bis 5, wobei die Fruchtzubereitung weitere Nahrungsbestandteile, vorzugsweise Getreide, Samen, Nüsse oder Mischungen davon, enthält.

7. Verfahren nach einem der Ansprüche 1 bis 6, wobei die stabile Fruchtzubereitung aus Früchten in Form von Fruchtpüree, Fruchtsaft, Fruchtstücken oder Mischungen davon und inaktivierter PME besteht.

8. Verfahren nach einem der Ansprüche 1 bis 7, wobei Ca²⁺-Ionen während der Herstellung vorhanden sind, insbesondere wobei Ca²⁺-Ionen vor der Inaktivierung von PME vorhanden sind; oder wobei keine Ca²⁺-Ionen während der Herstellung zugegeben werden, insbesondere wobei keine Ca²⁺-Ionen vor der Inaktivierung von PME vorhanden sind.

9. Verfahren nach einem der Ansprüche 1 bis 8, wobei die Zubereitung einen pH-Wert von 3,0 bis 7,0, vorzugsweise von 3,2 bis 5,5, insbesondere von 3,5 bis 4,2 hat.

10. Verfahren nach einem der Ansprüche 1 bis 9, wobei die stabile Fruchtzubereitung in eine lagerstabile Form verpackt wird.

11. Verfahren nach einem der Ansprüche 1 bis 10, wobei das Verfahren ferner einen Fruchterwärmungsschritt vor der Zugabe von PME zu der Fruchtzubereitung und einen Erwärmungsschritt, insbesondere einen Pasteurisierungsschritt, nach der enzymatischen Behandlung mit PME aufweist, wobei vorzugsweise im Verlauf des Erwärmungsschritts auch eine mechanische Beanspruchung, insbesondere bei Temperaturen unter 70 °C, aufgebracht wird.

12. Verfahren nach einem der Ansprüche 1 bis 11, wobei der Enzymierungsschritt für eine Dauer von 1 bis 120 min, vorzugsweise von 2 bis 60 min, insbesondere von 5 bis 30 min, durchgeführt wird; und/oder wobei der Enzymierungsschritt bei einer Temperatur von 20 bis 60 °C, vorzugsweise von 30 bis 50 °C, insbesondere von 35 bis 40 °C, durchgeführt wird; und/oder wobei der Enzymierungsschritt unter Rühren von 10 bis 500 U min⁻¹, vorzugsweise von 20 bis 100 U min⁻¹, insbesondere von 30 bis 50 U min⁻¹, durchgeführt wird.

13. Verfahren nach einem der Ansprüche 1 bis 12, wobei das Verfahren ferner einen Pasteurisierungsschritt mit mindestens 60 °C, vorzugsweise mindestens 70 °C, insbesondere mindestens 80 °C, aufweist; und/oder wobei das Verfahren ferner einen Pasteurisierungsschritt mit einer Dauer von mindestens 1 min, vorzugsweise mindestens 3 min, insbesondere mindestens 5 min, aufweist.

14. Verfahren nach einem der Ansprüche 1 bis 13, wobei das Verfahren ferner einen Fruchterwärmungsschritt von mindestens 50 °C, vorzugsweise mindestens 65 °C, insbesondere mindestens 75 °C, vor der Zugabe von PME zu der Fruchtzubereitung aufweist und/oder wobei das Verfahren ferner einen Fruchterwärmungsschritt für eine Dauer von 1 bis 120 min, vorzugsweise von 2 bis 60 min, insbesondere von 5 bis 30 min, vor der Zugabe von PME zu der Fruchtzubereitung aufweist.

15. Verfahren nach einem der Ansprüche 1 bis 14, wobei das Verfahren eine verbesserte Konsistenz bereitstellt, bestimmt durch eine Verringerung von Bostwick-Einheiten um mindestens zwei, vorzugsweise mindestens drei Bostwick-Einheiten in [cm/min]; oder wobei das Verfahren eine verbesserte Konsistenz bereitstellt, bestimmt durch eine Verringerung von Bostwick-Einheiten um mindestens fünf, vorzugsweise mindestens sechs, insbesondere mindestens sieben Bostwick-Einheiten in [cm/min]; und/oder wobei das Verfahren eine verbesserte Konsistenz bereitstellt, bestimmt durch eine Verringerung von Bostwick-Einheiten um mindestens 20 %, vorzugsweise mindestens 25 %, insbesondere mindestens 30 %; oder wobei das Verfahren eine verbesserte Konsistenz bereitstellt, bestimmt durch eine Verringerung von Bostwick-Einheiten um mindestens 40 %, vorzugsweise 50 %, insbesondere mindestens 60 %.

## Revendications

1. Procédé pour la production d'une préparation de fruit stable comprenant les étapes d'addition de pectine méthylestérase active (PME) à une préparation de fruit pour réaliser une étape d'enzymage sur la préparation de fruit, suivie par l'inactivation de PME dans la préparation de fruit pour obtenir une préparation de fruit stable, dans lequel une gélification est évitée ou au moins significativement réduite pendant la présence de PME active dans la préparation de fruit en appliquant une contrainte mécanique à la préparation de fruit comprenant de la PME active, dans lequel le procédé fournit une consistance améliorée comme déterminée par une réduction d'unités Bostwick d'au moins 1 unité Bostwick en [cm/min], dans lequel les unités Bostwick sont mesurées selon la norme ASTMF1080-93, incluant l'équilibrage des échantillons à 20°C avec une agitation supplémentaire avec un agitateur à hélice pendant 25 s à 25 tr/min, et dans lequel la réduction d'unités Bostwick est la réduction comparée à la préparation de fruit sans enzymage et également comparée avec la préparation de fruit enzymée, laquelle n'est pas exposée à une contrainte mécanique pendant l'enzymage.

2. Procédé selon la revendication 1, dans lequel la préparation de fruit est une purée ; et/ou dans lequel la préparation de fruit contient des morceaux de fruits, ou des fruits entiers ; et/ou dans lequel la préparation de fruit est une préparation choisie parmi la fraise (*Fragaria ananassa*)*,* pêche *(Prunus persica*)*,* abricot (*Prunus armeniaca*)*,* figue (*Ficus carica*), poire (*Pyrus*), cerise aigre *(Prunus cerasus),* cerise (*Prunus avium*)*,* pomme (Pyrus malus, *Malus pumila),* myrtille (*Vaccinium cyanococcus*), mangue (*Mangifera indica*)*,* banane (*Musa acuminata*) ; ou mélanges de ceux-ci.

3. Procédé selon la revendication 1 ou 2, dans lequel la purée ou le fruit utilisé pour la préparation de fruit est soumise à un traitement thermique avant l'étape d'enzymage.

4. Procédé selon la revendication 3, dans lequel le traitement thermique est réalisé à des températures de 60 à 110°C, de préférence de 75 à 95°C ; et/ou dans lequel le traitement thermique est réalisé pendant une durée de 30 secondes à 30 minutes, de préférence pendant une durée de 5-10 minutes.

5. Procédé selon l'une quelconque des revendications 1 à 4, dans lequel une contrainte mécanique de 1 à 100 Pa, de préférence de 3 à 20 Pa, est appliquée à la préparation de fruit contenant de la PME active, de préférence par agitation, secouage, pompage ou combinaisons de ceux-ci.

6. Procédé selon l'une quelconque des revendications 1 à 5, dans lequel la préparation de fruit contient des constituants nutritionnels supplémentaires, de préférence des céréales, graines, noix, ou mélanges de ceux-ci.

7. Procédé selon l'une quelconque des revendications 1 à 6, dans lequel la préparation de fruit stable consiste en fruits dans la forme de purée de fruits, jus de fruits, morceaux de fruits, ou mélanges de ceux-ci et PME inactivée.

8. Procédé selon l'une quelconque des revendications 1 à 7, dans lequel des ions Ca²⁺ sont présents pendant la production, particulièrement dans lequel des ions Ca²⁺ sont présents avant l'inactivation de PME ; ou dans lequel aucun ion Ca²⁺ n'est ajouté pendant la production, particulièrement dans lequel aucun ion Ca²⁺ n'est présent avant l'inactivation de PME.

9. Procédé selon l'une quelconque des revendications 1 à 8, dans lequel la préparation présente un pH de 3,0 à 7,0, de préférence de 3,2 à 5,5, particulièrement de 3,5 à 4,2.

10. Procédé selon l'une quelconque des revendications 1 à 9, dans lequel la préparation de fruit stable est emballée dans une forme stable au stockage.

11. Procédé selon l'une quelconque des revendications 1 à 10, dans lequel le procédé comprend de plus une étape de chauffage du fruit avant l'addition de PME à la préparation de fruit et une étape de chauffage après traitement enzymatique avec PME, particulièrement une étape de pasteurisation, dans lequel une contrainte mécanique est de préférence également appliquée au cours de l'étape de chauffage, particulièrement à des températures inférieures à 70°C.

12. Procédé selon l'une quelconque des revendications 1 à 11, dans lequel l'étape d'enzymage est réalisée pendant une durée de 1 à 120 min, de préférence de 2 à 60 min, particulièrement de 5 à 30 min ; et/ou dans lequel l'étape d'enzymage est réalisée à une température de 20 à 60°C, de préférence de 30 à 50°C, particulièrement de 35 à 40°C ; et/ou dans lequel l'étape d'enzymage est réalisée sous agitation de 10 à 500 tr/min, de préférence de 20 à 100 tr/min, particulièrement de 30 à 50 tr/min.

13. Procédé selon l'une quelconque des revendications 1 à 12, dans lequel le procédé comprend de plus une étape de pasteurisation avec au moins 60°C, de préférence au moins 70°C, particulièrement au moins 80°C ; et/ou dans lequel le procédé comprend de plus une étape de pasteurisation avec une durée d'au moins 1 min, de préférence d'au moins 3 min, particulièrement d'au moins 5 min.

14. Procédé selon l'une quelconque des revendications 1 à 13, dans lequel le procédé comprend de plus une étape de chauffage du fruit avant l'addition de PME à la préparation de fruit à au moins 50°C, de préférence au moins 65°C, particulièrement au moins 75°C et/ou dans lequel le procédé comprend de plus une étape de chauffage du fruit avant l'addition de PME à la préparation de fruit pendant une durée de 1 à 120 min, de préférence de 2 à 60 min, particulièrement de 5 à 30 min.

15. Procédé selon l'une quelconque des revendications 1 à 14, dans lequel le procédé fournit une consistance améliorée comme déterminée par une réduction d'unités Bostwick d'au moins 2, de préférence d'au moins 3, unités Bostwick en [cm/min] ; ou dans lequel le procédé fournit une consistance améliorée comme déterminée par une réduction d'unités Bostwick d'au moins 5, de préférence d'au moins 6, particulièrement d'au moins 7, unités Bostwick en [cm/min] ; et/ou dans lequel le procédé fournit une consistance améliorée comme déterminée par une réduction d'unités Bostwick d'au moins 20 %, de préférence d'au moins 25 %, particulièrement d'au moins 30 % ; ou dans lequel le procédé fournit une consistance améliorée comme déterminée par une réduction d'unités Bostwick d'au moins 40 %, de préférence 50 %, particulièrement d'au moins 60 %.
